**Europäisches Patentamt**

**European Patent Office**

**Office européen des brevets**

(19)

(11) Veröffentlichungsnummer : **0 298 907 B1**

# EUROPÄISCHE PATENTSCHRIFT

(12)

(45) Veröffentlichungstag der Patentschrift :
**29.05.91 Patentblatt 91/22**

(51) Int. Cl.⁵ : **B60C 27/08**

(21) Anmeldenummer : **88730148.9**

(22) Anmeldetag : **01.07.88**

(54) **Gleitschutzelement.**

(30) Priorität : **08.07.87 DE 3722903**

(43) Veröffentlichungstag der Anmeldung :
**11.01.89 Patentblatt 89/02**

(45) Bekanntmachung des Hinweises auf die
Patenterteilung :
**29.05.91 Patentblatt 91/22**

(84) Benannte Vertragsstaaten :
**AT CH DE FR GB IT LI SE**

(56) Entgegenhaltungen :
**AT-B- 360 844**
**FR-A- 1 415 962**

(73) Patentinhaber : **RUD-Kettenfabrik Rieger &**
**Dietz GmbH u. Co.**
**Friedensinsel**
**W-7080 Aalen 1 (DE)**

(72) Erfinder : **Zeiser, Peter, Dipl.-Ing.**
**Eckener Höhe 1**
**W-7080 Aalen-Wasseralfingen (DE)**
Erfinder : **Kaiser, Helmut, Dipl.-Ing.(FH)**
**Geierweg 28**
**W-7080 Aalen-Hofherrnweiler (DE)**
Erfinder : **Rieger, Hansjörg Werner, Dr.-Ing.**
**Saarstrasse 48**
**W-7080 Aalen (DE)**

(74) Vertreter : **Böning, Manfred, Dr. Ing. et al**
**Patentanwälte Dipl.-Ing. Dieter Jander Dr. Ing.**
**Manfred Böning Leistikowstrasse 2**
**W-1000 Berlin 19 (DE)**

## Beschreibung

Die Erfindung betrifft ein Stollen oder Stollen und Spikes aufweisendes Gleitschutzelement aus biegsamem Material für Gleitschutzvorrichtungen für Fahrzeugräder, das an seinen sich gegenüberliegenden Enden mit von Haken gebildeten Anschlußorganen für jeweils ein Kettenglied versehen ist.

Bei einem aus der AT-B-360 844 bekannten Gleitschutzelement der vorstehenden Art werden die Stollen und Spikes von Trägern gehalten, die in den Bereich der Flanken des jeweils auf ein Fahrzeugrad aufgezogenen Reifens ragende Verlängerungen aufweisen, die an ihren freien Enden mit angeformten Haken für innere und äußere Seitenketten versehen sind. Die bekannten Gleitschutzelemente nehmen bei montierter Gleitschutzvorrichtung ein Lage auf dem Fahrzeugrad ein, die mit der Lage der Querketten von Leiterketten vergleichbar ist. Dies bedeutet, daß die Laufruhe der mit ihnen ausgerüsteten Gleitschutzvorrichtungen zu wünschen übrig läßt und deren Verschleißbeanspruchung groß ist.

Der Erfindung liegt die Aufgabe zugrunde, ein Gleitschutzelement der in Betracht gezogenen Gattung zu schaffen, das auf einfache Weise mit auf der Lauffläche eines Fahrzeugrades zu liegen kommenden Kettenstrangabschnitten kombiniert werden kann und sich durch eine lange Lebensdauer und gute Seitenführungseigenschaften auszeichnet. Diese Aufgabe wird erfindungsgemäß dadurch gelöst, daß es zwei die Stollen bzw. Stollen und Spikes tragende, durch einen Abstandshalter miteinander verbundene Längs stücke aufweist, daß in die Längsstücke formschlüssig in Richtung der Längsstücke orientierte Haken aus Stahl eingebettet sind, in die jeweils ein im wesentlichen fluchtend zu den Längsstücken und den Haken orientiertes, im Laufflächenbereich des Reifens des Fahrzeugrades gelegenes Kettenglied einhängbar ist.

Das erfindungsgemäße Gleitschutzelement läßt sich schnell und einfach mit Kettenstrangabschnitten zu einem gute Gleitschutzeigenschaften sowohl im Schnee als auch auf Eis aufweisenden Laufnetz zusammensetzen. Es fördert den geräuscharmen Lauf einer mit einem entsprechenden Laufnetz ausgestatteten Gleitschutzvorrichtung und verbessert die Haftverhältnisse zwischen einer derartigen Gleitschutzvorrichtung und der Fahrbahn.

Weitere Einzelheiten und Merkmale der erfindungsgemäßen Gleitschutzvorrichtung ergeben sich aus den Unteransprüchen und der nachfolgenden Beschreibung bevorzugter, in der beigefügten Zeichnung dargestellter Ausführungsbeispiele. Es zeigen :

Fig. 1 die Draufsicht auf ein Gleitschutzelement mit hieran angeschlossenen Kettenstrangabschnitten,

Fig. 2 einen Schnitt längs der Linie II-II in Fig. 1,

Fig. 3 eine Ansicht in Richtung der Pfeile III-III in Fig. 1,

Fig. 4 eine der Fig. 1 entsprechende Draufsicht auf ein weiteres Gleitschutzelement,

Fig. 5 einen Schnitt längs der Linie V-V in Fig. 4,

Fig. 6 einen Schnitt längs der Linie VI-VI in Fig. 4,

Fig. 7 einen der Fig. 6 entsprechenden Schnitt durch ein modifiziertes Ausführungsbeispiel,

Fig. 8 die Draufsicht auf ein bei dem Ausführungsbeispiel gemäß Figur 7 verwendetes Kupplungselement,

Fig. 9 einen der Fig. 6 entsprechenden Schnitt durch ein weiteres Ausführungsbeispiel und

Fig. 10 einen der Fig. 6 entsprechenden Schnitt durch ein weiteres Ausführungsbeispiel.

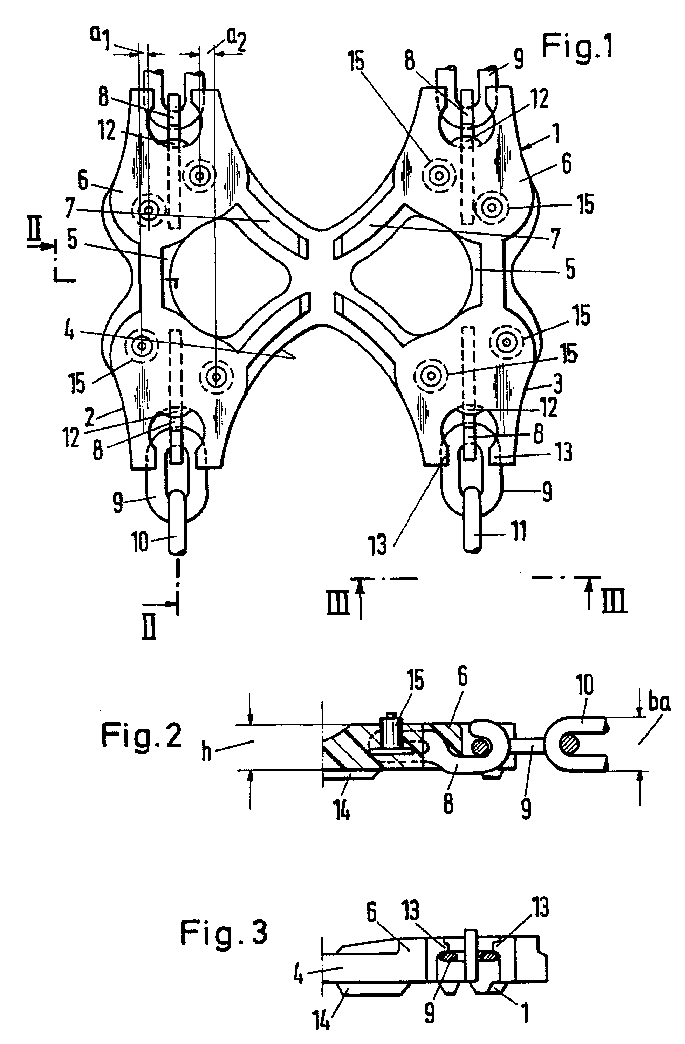

Das in Fig. 1 dargestellte Gleitschutzelement 1 besteht aus zwei Längsstücken 2 und 3, die durch einen X-förmigen Abstandshalter 4 miteinander verbunden sind und in ihrem mittleren Bereich Einschnürungen 5 aufweisen. Über die gesamte Länge der Längsstücke 2, 3 erstrecken sich Stollen 6, die in den Bereich des Abstandshalters 4 ragende Ausleger 7 aufweisen. Durch die X-förmige Ausbildung des in seiner Mitte stollenfreien Abstandshalters 4 und durch die Einschnürungen 5 wird ein hohes Maß an Flexibilität des Gleitschutzelementes 1 erreicht und so die Voraussetzung dafür geschaffen, daß das Gleitschutzelement über seinen ganzen Bereich eng am Reifen anliegt. Das enge Anliegen kommt nicht nur der Standzeit des Gleitschutzelementes 1 zugute, sondern es fördert auch die Laufruhe eines Fahrzeuges, auf dessen Räder eine Gleitschutzvorrichtung mit derartigen Gleitschutzelementen montiert ist. An den Enden der Längsstücke 2 und 3 sind formschlüssig in die Gleitschutzelemente 1 Haken 8 aus Stahl für jeweils ein parallel zur Lauffläche orientiertes Glied 9 von Kettenstrangabschnitten 10 bzw. 11 eingebettet. Elastische Verriegelungsnasen 12 verhindern ein Aushaken der Glieder 9 aus den Haken 8, während Sperrnasen 13 ein Hoch- oder Querschwenken der Glieder 9 unterbinden.

Die Längsstücke 2 und 3 sind im wesentlichen fluchtend zu den Kettenstrangabschnitten 10 und 11 angeordnet. Sie bilden mit diesen Spurringe, die einem seitlichen Ausweichen des Fahrzeuges entgegenwirken. Um die Spurhaltung auf dem gesamten Umfang eines Fahrzeugrades sicherzustellen und eine hohe Laufruhe zu verwirklichen, ist die Höhe $h$ der Gleitschutzelemente 1 im Bereich ihrer Stollen 6 im wesentlichen gleich der äußeren Breite $b_a$ der Glieder der Kettenstrangabschnitte 10 bzw. 11, wobei an der Unterseite der Gleitschutzelemente angeordnete Bremsnocken 14, die einem Durchrutschen des Laufnetzes gegenüber der Lauffläche entgegenwirken, außer Betracht bleiben.

Durch die Formgebung der Stollen 6 und deren Ausleger 7 wird beim Einsatz der Gleitschutzelemente 1 im Schnee ein ausreichender Vortrieb gewährleistet. Um auch auf vereister Fahrbahn gute Gleitschutzeigenschaften zu bieten, sind die Stollen 6 mit Spikes 15 bestückt. Einen optimalen Gleitschutzeffekt erzielt man, wenn an den Ecken der Gleitschutzelemente 1 jeweils zwei Spikes 15 angeordnet sind, wobei der Abstand jeweils zweier in Laufrichtung aufeinanderfolgender Spikes 15 eines Gleitschutzelementes an der Außenseite des Elementes kleiner ist als an dessen Innenseite. Als günstig erweist es sich darüber hinaus, daß die Spikes 15 in Radumfangsrichtung betrachtet um Beträge $a_1$ bzw. $a_2$ quer zueinander versetzt sind.

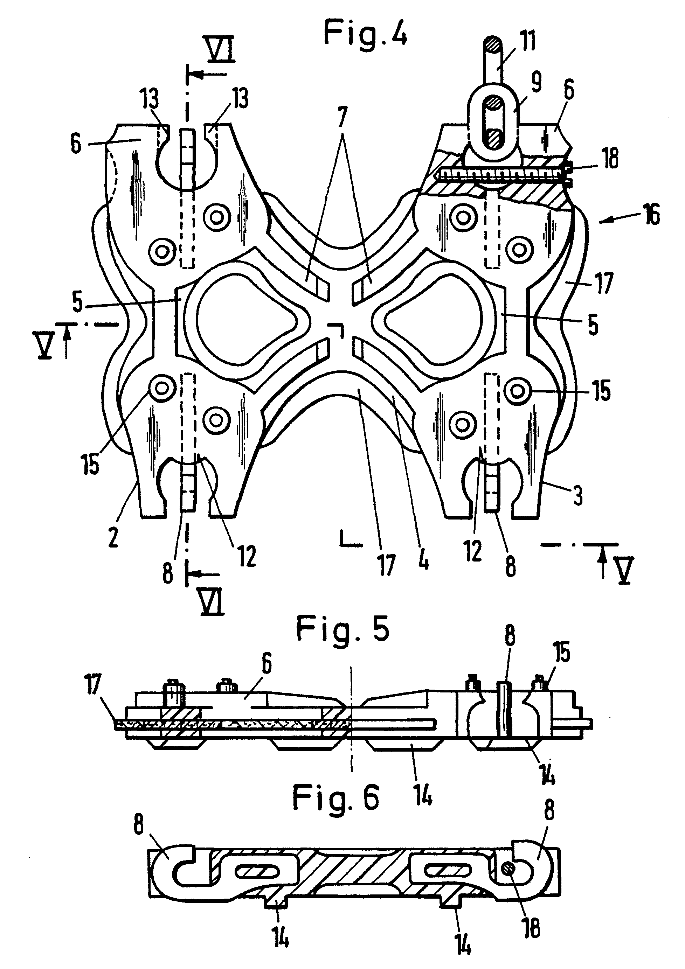

Ein modifiziertes Gleitschutzelement 16 ist in den Fig. 4 bis 6 dargestellt. Teile, die Teilen des Gleitschutzelementes 1 gemäß Fig. 1 bis 3 entsprechen, sind durch die gleichen Bezugszeichen gekennzeichnet, so daß es genügt, wenn hier nur die Unterschiede zwischen den beiden Konstruktionen beschrieben werden. Anders als das Gleitschutzelement 1 ist das Gleitschutzelement 16 mit einer zur Erhöhung seiner Festigkeit dienenden Verstärkungseinlage 17 versehen. Außerdem sind am einen Ende der Längsstücke 2 und 3 an die Stelle von Verriegelungsnasen 12 Schrauben 18 getreten, die zur Sicherung des jeweils in ein Gleitschutzelement 16 eingehängten Gliedes 9 dienen. Die Schrauben 18 sind mehrgängig ausgebildet und mit einem Steilgewinde ausgestattet, das ein schnelles und bequemes Befestigen und Lösen von Gliedern 9 ermöglicht, falls man die Länge des Laufnetzes verkürzen möchte.

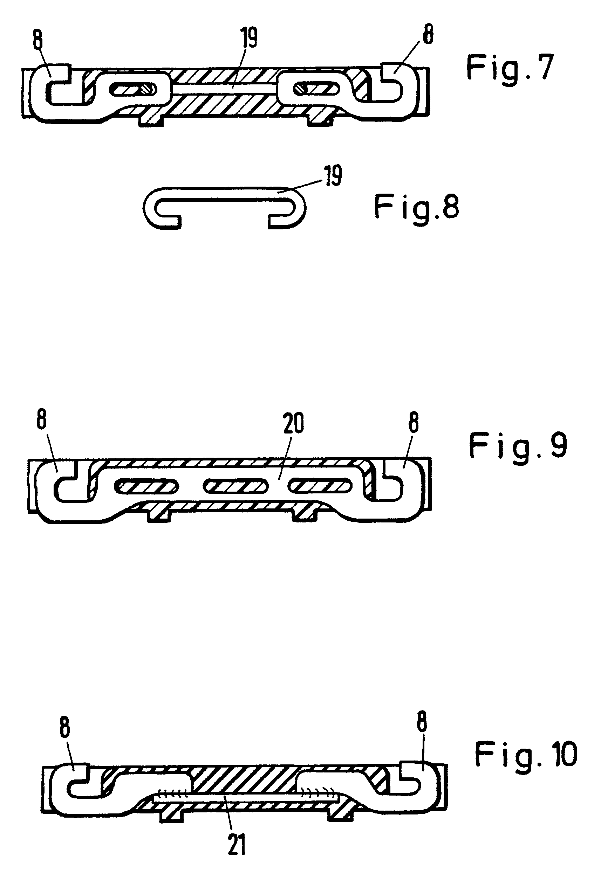

Sowohl beim Gleitschutzelement 1 als auch beim Gleitschutzelement 16 erfolgt die Verbindung zweier Haken 8 eines Längsstückes 2 bzw. 3 durch das Grundmaterial des Gleitschutzelementes und gegebenenfalls durch die Verstärkungseinlage 17. Stattdessen ist es auch möglich, die Haken 8, wie dies in den Fig. 7 und 8 angedeutet ist, durch ein Kupplungselement 19 miteinander zu verbinden. Das Kupplungselement 19 bildet eine die Zugkräfte übertragende Brücke zwischen den jeweils fluchtend zueinander angeordneten Haken 8.

Schließlich können zwei Haken 8 Bestandteil eines einzigen einstückigen Bauteiles 20 sein oder aber durch Punktschweißen durch eine Federstahlbrücke 21 miteinander fest verbunden sein, wie dies in den Fig. 9 und 10 gezeigt ist.

## Ansprüche

1. Stollen (6) oder Stollen (6) und Spikes (15) aufweisendes Gleitschutzelement (1) aus biegsamem Material für Gleitschutzvorrichtungen für Fahrzeugräder, das an seinen sich gegenüberliegenden Enden mit von Haken (8) gebildeten Anschlußorganen für jeweils ein Kettenglied (9) versehen ist, dadurch gekennzeichnet, daß es zwei die Stollen (6) bzw. Stollen (6) und Spikes (15) tragende, durch einen Abstandshalter (4) miteinander verbundene Längsstücke (2, 3) aufweist, daß in die Längsstücke (2, 3) formschlüssig in Richtung der Längsstücke (2, 3) orientierte Haken (8) aus Stahl eingebettet sind, in die jeweils ein im wesentlichen fluchtend zu den Längsstücken (2, 3) und den Haken (8) orientiertes, im Lauffächenbereich des Reifens des Fahrzeugrades gelegenes Kettenglied einhängbar ist.

2. Gleitschutzelement nach Anspruch 1, dadurch gekennzeichnet, daß die Haken (8) zwischen Zinken einer Führungsgabel für in die Haken (8) einhängbare, parallel zur Lauffläche orientierte Kettenglieder (9) ragen.

3. Gleitschutzelement nach Anspruch 1 oder 2, dadurch gekennzeichnet, daß die einem Längsstück (2, 3) jeweils zugeordneten Haken (8) über ein Kupplungselement (19) miteinander verbunden sind.

4. Gleitschutzelement nach Anspruch 2 oder 3, dadurch gekennzeichnet, daß die Zinken Schwenkbewegungen begrenzende Sperrnasen (13) für die Längsschenkel von in die Haken (8) einhängbaren Kettengliedern (9) bilden.

5. Gleitschutzelement nach einem der Ansprüche 1 bis 4, dadurch gekennzeichnet, daß es mit elastischen Verriegelungsnasen (12) zur Verriegelung von in die Haken (8) eingehängten Kettengliedern (9) versehen ist

6. Gleitschutzelement nach einem der Ansprüche 1 bis 5, dadurch gekennzeichnet, daß es mit Schrauben (18) zur Sicherung von in die Haken (8) einhängbaren Kettengliedern versehen ist.

7. Gleitschutzelement nach Anspruch 6, dadurch gekennzeichnet, daß die Schrauben (18) als mehrgängige Steilgewindeschrauben ausgebildet sind.

8. Gleitschutzelement nach einem der Ansprüche 1 bis 7, dadurch gekennzeichnet, daß die Längsstücke (2, 3) mit mittigen Einschnürungen (5) versehen sind.

9. Gleitschutzelement nach einem der Ansprüche 1 bis 8, dadurch gekennzeichnet, daß der Abstandshalter (4) X-förmig ausgebildet ist.

10. Gleitschutzelement nach einem der Ansprüche 1 bis 9, dadurch gekennzeichnet, daß beidseits eines jeden Hakens (8) in Längsrichtung zueinander versetzt Spikes (15) angeordnet sind.

11. Gleitschutzelement nach einem der Ansprüche 1 bis 10, dadurch gekennzeichnet, daß an seinen vier Ecken jeweils zwei Spikes (15) angeordnet sind.

12. Gleitschutzelement nach Anspruch 10 oder 11, dadurch gekennzeichnet, daß die Spikes (15) eines jeden Längsstückes (2, 3) seitlich zueinander versetzt angeordnet sind.

13. Gleitschutzelement nach einem der Ansprüche 1 bis 12, dadurch gekennzeichnet, daß es an seiner den Stollen (6) und/oder Spikes (15) abgewandten Seite mit Bremsnocken (14) versehen ist.

14. Gleitschutzelement nach einem der Ansprüche 1 bis 13, dadurch gekennzeichnet, daß sein Grundkörper aus Polyurethan besteht.

15. Gleitschutzelement nach einem der Ansprüche 1 bis 14, dadurch gekennzeichnet, daß es mit einer Verstärkungseinlage (17) versehen ist.

## Claims

1. An antiskid element (1) of flexible material, comprising studs (6) or studs (6) and spikes (15) for antiskid devices for vehicle wheels, which is provided at its opposite ends with attachment elements formed by hooks (8) each for a chain link (9), characterised in that it comprises two longitudinal pieces (2, 3) connected with one another by a distance member (4) and carrying the studs (6) or studs (6) and spikes (15), as the case may be, in that hooks (8) of steel oriented in the direction of the longitudinal pieces (2, 3) are embedded in shape-engaging manner into the longitudinal pieces (2, 3) into each of which hooks a chain link oriented substantially in alignment with the longitudinal pieces (2, 3) and the hooks (8) and placed in the tread surface region of the tyre of the vehicle wheel can be hung.

2. An antiskid element according to Claim 1, characterised in that the hooks (8) extend between prongs of a guide fork for chain links (9) which can be hung in the hooks (8) and are oriented parallel to the tread surface.

3. An antiskid element according to Claim 1 or 2, characterised in that the hooks (8) allocated each to one longitudinal piece (2, 3) are connected with one another through a coupling element (19).

4. An antiskid element according to Claim 2 or 3, characterised in that the prongs form blocking noses (13), which limit pivoting movements, for the longitudinal legs of chain links (9) which can be hung on the hooks (8).

5. An antiskid element according to any one of Claims 1 to 4, characterised in that it is provided with elastic locking noses (12) for the locking of chain links (9) hung on the hooks (8).

6. An antiskid element according to any one of Claims 1 to 5, characterised in that it is provided with screws (18) for the securing of chain links which can be hung on the hooks (8).

7. An antiskid element according to Claim 6, characterised in that the screws (18) are made as multistart coarse-threaded screws.

8. An antiskid element according to any one of Claims 1 to 7, characterised in that the longitudinal pieces (2, 3) are provided with central constrictions (5).

9. An antiskid element according to any one of Claims 1 to 8, characterised in that the distance member (4) is made X-shaped.

10. An antiskid element according to any one of Claims 1 to 9, characterised in that spikes (15) are arranged offset in the longitudinal direction in relation to one another on both sides of each hook (8).

11. An antiskid element according to any one of Claims 1 to 10, characterised in that two spikes (15) are arranged on each of its four corners.

12. An antiskid element according to Claim 10 or 11, characterised in that the spikes (15) of each longitudinal piece (2, 3) are arranged laterally offset in relation to one another.

13. An antiskid element according to any one of Claims 1 to 12, characterised in that it is provided with brake dogs (14) on its side remote from the studs (6) and/or spikes (15).

14. An antiskid element according to any one of Claims 1 to 13, characterised in that its basic body is made of polyurethane.

15. An antiskid element according to any one of Claims 1 to 14, characterised in that it is provided with a reinforcing inlay (17).

## Revendications

1. Elément antidérapant (1) en matériau flexible pour des dispositifs antidérapants destinés à des roues de véhicules, qui présente des côtes (6) ou des côtes (6) et des crampons (15) et qui est muni à ses extrémités opposées d'organes de raccordement, formés par des crochets (8), pour des maillons de chaînes respectifs (9), caractérisé en ce qu'il présente deux parties longitudinales (2, 3) mutuellement reliées par un écarteur (4) et portant les côtes (6) ou les côtes (6) et les crampons (15), et en ce que des crochets (8) en acier, orientés dans le sens des parties longitudinales (2, 3), sont incorporés avec épousement de formes dans les parties longitudinales (2, 3), un maillon de chaîne respectif, orienté sensiblement en alignement avec les parties longitudinales (2, 3) et les crochets (8) et situé dans la région de la bande de roulement du pneumatique de la roue de véhicule, pouvant être accroché dans chaque crochet (8).

2. Elément antidérapant selon la revendication 1, caractérisé en ce que les crochets (8) se dressent entre les bras d'une chape de guidage pour des maillons de chaînes (9) qui peuvent être accrochés dans les crochets (8) et sont orientés parallèlement à la bande de roulement.

3. Elément antidérapant selon la revendication 1 ou 2, caractérisé en ce que les crochets (8) respectivement associés à une partie longitudinale (2, 3) sont mutuellement reliés par l'intermédiaire d'un élément d'accouplement (19).

4. Elément antidérapant selon la revendication 2 ou 3, caractérisé en ce que les bras forment des ergots d'arrêt (13) limitant les mouvements de pivotement des branches longitudinales de maillons de chaînes (9) qui peuvent être accrochés dans les crochets (8).

5. Elément antidérapant selon l'une des revendications 1 à 4, caractérisé en ce qu'il est muni d'ergots de blocage élastiques (12) pour bloquer des maillons de chaînes (9) accrochés dans les crochets (8).

6. Elément antidérapant selon l'une des revendications 1 à 5, caractérisé en ce qu'il est muni de vis (18) pour assujettir des maillons de chaînes qui peuvent être accrochés dans les crochets (8).

7. Elément antidérapant selon la revendication 6, caractérisé en ce que les vis (18) sont réalisées sous la forme de vis à pas rapide à filets multiples.

8. Elément antidérapant selon l'une des revendications 1 à 7, caractérisé en ce que les parties longitudinales (2, 3) sont munies de rétrécissements centraux (5).

9. Elément antidérapant selon l'une des revendications 1 à 8, caractérisé en ce que l'écarteur (4) est réalisé en forme de X.

10. Elément antidérapant selon l'une des revendications 1 à 9, caractérisé en ce que des crampons (15), mutuellement décalés dans le sens longitudinal, sont disposés de part et d'autre de chaque crochet (8).

11. Elément antidérapant selon l'une des revendications 1 à 10, caractérisé en ce que deux crampons (15) sont disposés en chacun de ses quatre coins.

12. Elément antidérapant selon la revendication 10 ou 11, caractérisé en ce que les crampons (15) de chaque partie longitudinale (2, 3) sont latéralement décalés les uns par rapport aux autres.

13. Elément antidérapant selon l'une des revendications 1 à 12, caractérisé en ce qu'il est muni de bossages de freinage (14) sur son côté opposé aux côtes (6) et/ou aux crampons (15).

14. Elément antidérapant selon l'une des revendications 1 à 13, caractérisé en ce que son corps de base est réalisé en polyuréthane.

16. Elément antidérapant selon l'une des revendications 1 à 14, caractérisé en ce qu'il est muni d'une garniture interne de renforcement (17).

EP 0 298 907 B1

Fig.1

Fig.2

Fig.3

6

# Fig.4

# Fig. 5

# Fig. 6

Fig.7

Fig.8

Fig.9

Fig.10